# EUROPEAN PATENT APPLICATION

(11) **EP 2 018 030 A1**
(43) Date of publication of application: **21.01.2009**
(21) Application number: 07014064.5
(22) Date of filing: 18.07.2007
(51) Int. Cl.: H04M 1/04, G06F 1/16, H04B 1/38, H04M 1/725

(54) **A docking station and a kit for a personal electronic device**

(71) Applicant: Blue Bee Limited, Killinarden Enterprise Park Tallaght , Dublin 24 (IE)
(72) Inventor: Hennessy, Michael, Knocklyon Dublin 16 (IE)
(74) Representative: Lane, Cathal Michael

(57) **Abstract**

The present invention relates to a docking station kit for a personal electronic device such as a mobile phone, the docking station kit comprising a docking support having defined therein a first compartment space in which the personal electronic device is dockable and a second compartment space in which a modular accessory for the personal electronic device is dockable. The docking station kit further comprises at least two modular accessories which are interchangeably dockable within the second compartment space. Further embodiments describe the docking support with an alternative number and/or alternative arrangements of compartments along with various alternative modular accessories that are interchangeably dockable within these compartments. The interchangeable modular accessories can be used to add additional functionality to the personal electronic device quite easily. Parts can be added and interchanged while the device otherwise functions as an integral unit when assembled.

## Description

### Field of the Invention

The present invention relates to a docking station and docking station kit for a personal electronic device, such as a phone. In particular, of interest are personal electronic devices such as mobile (cellular) phones.

### Background to the Invention

The convergence of various technologies has meant that personal electronic devices have become multifunctional. For example, it is in usual to include music playing functionality and Internet connectivity to what were traditionally solely gaming consoles. An example is the PlayStation portable (PSP). On the other hand, mobile telephones have included increased functionality including internet access for upload or download of software or music, imaging and other multimedia. Phones are supplied with electronic games and can download others. Many other devices such as MP3 players and PDA (Personal Digital Assistant) devices all include functionality which extends beyond the primary functionality of the device. One of the common features of such devices is that they are all portable, that is designed to travel with the user. They are often sized to fit within a clothing pocket.

In order to ensure portability of devices, the size of devices have been increasingly miniaturised by reducing overall dimensions. There is a conflict between reducing the size of the device and providing additional functionality. For example buttons of a keypad become too close together to press one key without inadvertently pressing another. For that reason, ancillary devices have been proposed to increased functionality. Another issue that arises is quality of image and sound, again most pertinent when the device has been made the smallest possible dimensions.

In response to such challenges, many ancillary devices including docking stations have been provided for a variety of personal electronic devices.

For example, a huge range of docking stations are available for MP3 players including the Apple iPod™. Such docking stations include a cradle into which the MP3 player is fitted and were it connects to jacks within the docking station. The docking station is often provided with integrated or separate speakers or the like to allow music to be played through the larger (and thus better quality) speakers of the docking station as compared to playing through the MP3 player itself. The docking station is often left in a room, such as of a residence or place of work, or in a vehicle, and is only used when the personal electronic device owner is present. When the owner is away from the docking station they are free to undock the personal electronic device from the docking station and carry it with them for use as they require. The docking stations of this type are not portable in the sense of being easily carried on the person.

US patent publication No. 2007/77965 (Fox) describes a docking station for a music-enabled cell phone. The docking station has a cradle for holding the cell phone and a cable connector with a stereo headset plug at one end and audio connectors at the other end. The cradle includes a connector for recharging.

EP 1 736 847 (Vance *et al*) describes a universal game controller provided for use with a plurality of different types of cell phones. The controller includes a phone dock for receiving the desired cell phone. A receptor makes electrical connection to the cell phone. Control pads that are operable by fingers or thumbs are available for controlling the functionality and available on the game which can be played on the cellular phone. The controller and thus provides more traditional gaming control functionality than is available on a conventional cell phone. Without the controller, the game would have to be played by pressing specific buttons on the keypad of the cell phone.

A commercially available cradle for the PSP is provided by Nyko. In particular a product called the "Nyko Charger Cradle" is reported on the Internet as being available commercially. The device has been described as having a rechargeable lithium-ion battery that will keep the PSP powered for a reported additional five hours. The PSP sits into a pair of U-shaped brackets forming a cradle portion. The brackets sit atop two opposing handles which may be gripped by a user. The PSP is then played in the normal way utilising its own integral gaming control buttons.

Notwithstanding the various proposals that have been made to date, there is still a requirement to improve user interaction when using various functions of personal electronic devices such as mobile phones.

### Summary of the Invention

The present inventor has invented a docking station which allows multiple configurations for use of a personal electronic device. In particular the docking station provides a cradle into which the personal electronic device may be fitted, and acts as an adapter, allowing various additional components to be functionally connected to the personal electronic device. Of particular interest within the present invention are personal electronic devices with display screens.

In particular the present invention provides a docking station kit for a personal electronic device such as a mobile phone, the docking station kit comprising:
a docking support having defined therein:
   a first compartment space in which the personal electronic device is dockable;
   a second compartment space in which a modular accessory for the personal electronic device is
   dockable; and
   at least two modular accessories which are interchangeably dockable within the second compartment space.

It will be appreciated that interchangeable modular accessories will typically be interchanged for different functionality. It will also be appreciated, that when the kit of the invention is in use, the modular accessories are operably connected to the personal electronic device. The interchangeable modular accessories will generally be input or output devices. The interchangeable modular accessories can thus be used to output from the personal electronic device or to input to the device.

Some examples of the types of modular devices which are contemplated for use within the present invention include speakers;
controllers including control pads including touch pads, key pads, key boards, roller balls, joysticks, mouse devices, motion sensors, and other controllers such as game controllers and the like;
memory devices;
processing units including CPU's and hard drives;
imaging devices such as a still or video camera;
players (including those with recording or "burning" facilities) for audio, visual or audio-visual including CD, DVD, MP3, etc,
power units including AC input devices and rechargeable or non-rechargeable batteries;
connectors or adapters for facilitating connection of the personal electronic device to other functional or non-functional components;
printer devices;
TV reception devices, radio receptions devices, TV and radio reception devices;
other peripherals, including wireless enabling devices, readers including card readers, printers, scanners, SIM modules, VOIP modules, GPS (satellite navigation) modules etc.

Blanks (non-functional accessories which fill out the compartment space) can also be employed if desired. These could be moulded plastic pieces.

It is desirable that there are at least three compartment spaces - a first compartment space in which the personal electronic device is dockable;
a second compartment space in which a modular accessory for the personal electronic device is dockable; and
a third compartment space in which a modular accessory for the personal electronic device is dockable.

This means that additional functionality can be added to the personal electronic device quite easily. The modular accessories in the second and third compartment spaces can have the same or different functionality, for example a pair of speakers or a pair of controllers, or one of each.

Generally it is desirable that second and third compartment spaces are provided on opposing sides of the (first) compartment space for the personal electronic device. This allows for input or output devices to be arranged on either side of the personal electronic device. For example in the gaming application, separate controls can be provided on either side of the personal electronic device. This is a set-up typical of many gaming consoles and which users find easy to use. Such a configuration is easily achievable by sizing the second and third compartments to substantially the same dimensions. An orientation of the assembly of the present invention where the controls of a module are to the left or right of the personal electronic device display screen in the correct viewing orientation of the display screen. This arrangement will generally be considered a "landscape" arrangement (generally the screen will be longer in the left to right direction),while the orientation where the controls of a module are at the bottom of the display screen will generally be considered a "portrait" arrangement (generally the screen will be longer top to bottom then left to right). Generally placing modular units on opposing sides of the personal electronic device will function best in the landscape arrangement.

Encompassed within the present invention is an arrangement where two or more compartments for modular accessories are on the same side (for example at one end of the personal electronic device). Such an arrangement will generally result in a landscape type arrangement.

It will be appreciated that any number of compartment spaces can be provided.

It will be appreciated that the compartments can be constructed to any desired relative positioning arrangement. The compartments may be side-by-side, one above another, or any combination thereof. It will be appreciated that while it is desirable to have at least two compartments to which the same accessory can be interchangeably fitted, the present invention is not limited to having such compartments and one or more compartments or indeed all compartments may be differently sized.

Generally speaking, it will be desirable that the second and third compartment spaces are compatible with the same modular devices so that the modular accessories fit in both and operably connect to the personal electronic device. As will be appreciated this has many advantages mainly due to the versatile interchangeability. Furthermore, the user may prefer to swap the positions of certain modular accessories based on their preferred hand for operating the accessory such as when using hand controls.

It is desirable that any accessory is substantially accommodated within its (respective) compartment. It is also desirable that the personal electronic device is substantially accommodated within its compartment. This means that overall the assembly will have substantially flush surfaces at least when all of the compartments are in use. Generally speaking, it will be desirable that the docking support will hold the electronic device and any accessories proximate each other. This has the advantage that the overall impression to the user is that it is an integral piece of equipment.

It is desirable that any connective arrangements such as ports, jacks, terminals, wiring or the like are accommodated internally in the assembly so that they are hidden from view in the assembly. This may be achieved by having any connective arrangements on a sidewall of the compartment. Any connective arrangements on the accessory can also be on a sidewall of the accessory. Accordingly, when the accessory is fitted into the compartment, the connective arrangements will be arranged to mate and will be hidden for view. Use of male and female connective arrangements is particularly desirable in this respect as this will help achieve substantially flush mating of the docking support and any accessory.

It is desirable that when an accessory connects it not only is attached (functionally where required) to the docking support, but that outer surface(s) of the accessory form a substantially continuous surface with the docking support and/or the personal electronic device.

It will be appreciated then that the device is completely modular in construction. Parts can be added and interchanged while the device otherwise functions as an integral unit when assembled. Generally the assembly will be of the type which may be handheld and operated easily by one or more fingers or thumbs in the handheld position.

It will be appreciated that the, or each, accessory is physically supported by the docking support. In conventional arrangements when a device is attached to a personal electronic device the functional connection such as a jack, USB connection etc. is required to support at least part of the weight of the attached device. This means a functional connection end of the device is supported but the remainder of the device, in particular the part of the device extending away from the functional connection is unsupported.

In contrast within the present invention the docking support will provide a physical barrier which will protect (and desirably conceal) the functional connection. Furthermore the docking support will provide physical support not only at the functional connection but also for that part of the device which extends away from the functional support.

There are many possible arrangements for providing such physical support within the compartments.

In one desirable construction the accessories push-fit to the docking support. It is desirable to achieve both functional mating of the docking support and the accessories and also further mechanical interengagement of the accessory and the docking support. Such an arrangement is desirable also for the personal electronic device.

One arrangement for mechanical interengagement is a push-fit interengagement such as a click-fit, snap-fit etc. Where desirable a release mechanism may be provided, for a releasable catch to allow removal of the accessory or personal electronic device as required.

One construction provides a slide fit where a slide runs within a retaining guide. The slide can take the form of a rail with an engaging portion such as an engaging head which runs within and is retained in the retaining guide. The slide or guide can be arranged with one on the personal electronic device and/or the accessory and the other on the docking support.

If desired one or more connectors of any desired type can be mounted in the docking support. For example if direct connection to the personal electronic device were impeded (by the docking support) the connectors would act as intermediary connections effectively providing the same connection type as on the personal electronic device on the docking support. Devices external to the docking support could thus be attached.

In one construction a pivot arrangement is provided for allowing mating of the personal electronic device or accessory with the docking support. The pivot arrangement may be employed to allow connections on the docking support be pivoted to a position for mating with the personal electronic device or accessory and then later pivoting the mated personal electronic device or accessory back into its compartment space. This may be particularly desirable where more than one functional connection needs to be achieved. Such a pivot arrangement can be combined with all or any of the mating arrangements described above.

A pivotal arrangement may also be desirable for one or more of the personal electronic device and the accessories while functionally connected (and supported) by the docking support. For example it may be desired to allow pivotal movement of the personal electronic device so as to allow a screen thereof to be held vertically or at an inclination (relative to the docking support when the docking support is substantially horizontal) for example for better viewing. Similarly it may also be desired to allow one or more accessories to held vertically or at an inclination, for example a speaker for sound emission toward a listener. Such an arrangement may be provided by having one or more flip-up portions on the docking support. The flip-up portion will retain the required functional connectivity while allowing the desired relative position to be set by the user. Any pivotal arrangement may comprise a support frame for the personal electronic device or accessory.

Desirably at least the compartment of the docking support for the personal electronic device include one or more grips for assisting in the retention of the device within the docking support. The compartment spaces will generally be rectangular in shape. In such a case it is desirable to have such grips (internally) on at least one, for example all, of the corners.

Desirably at least one, and more suitably all of the compartments of the docking support include one or more dampers, for absorbing shock, in the assembled configuration. This allows for impact-resistance for example when the device is inadvertently dropped or is subjected to a knock. Where the compartment spaces are substantially rectangular it is desirable to have such grips (internally) on at least one, for example all, of the corners. It will be appreciated that the grips may form the dampers and *vice versa.* For example grips of resiliently deformable material such as rubber could be employed.

In one arrangement where the personal electronic device or an accessory has a camera an opening such as an aperture or window may be provided in the docking support to allow images to be recorded without interference. In one arrangement the camera is connected to the personal electronic device so that the personal electronic device can display the image being captured and desirably all functionality of the camera.

In one arrangement the docking support comprises a substantially planar longitudinal member upon which compartments are defined by one or more upstanding walls. Desirably at least said first and second compartments and suitably all compartments are defined in this way. It is desirable to have each personal electronic device or accessory within a compartment defined by the longitudinal member and at least two upstanding walls (each on a different side of the device to the other). The compartments act as bays into which the accessories (or personal electronic device) dock. In this way the modularity of the overall assembly is created. In some embodiments it may be desirable to have the personal electronic device held within four walls (in a rectangular configuration).

Any or each compartment can be provided with a base which physically supports the personal electronic device or accessory. For example the planar member can extend to form a (floor) support pan for any compartment. The support pan can be a closed surface such as a floor or an open surface such as a support frame (which may run about the periphery of the personal electronic device or accessory - e.g. in the form of a rim). It is desirable that the support pan extends to support at least 50%, more desirably substantially all, of the personal electronic device or accessory.

Desirably when assembled the personal electronic device or accessory is pushed into place and is gripped by any arrangement described above. Indeed the personal electronic device or accessory may couple with the docking support so that the personal electronic device or accessory is held firmly against the planar member. For compartments above the planar member it will normally form the base of the compartment while it may be considered to form a roof of any compartment disposed below the planar support.

Also within the present invention is a docking support having defined therein:
a first compartment space in which the personal
electronic device is dockable;
a second compartment space in which a modular accessory for the personal electronic device is dockable.

The invention also includes a modular accessory adapted to mate to a docking support of the present invention.

The invention further extends to a docking station kit for a personal electronic device such as a mobile phone, substantially as described herein with reference to the drawings. The invention also extends to a docking station substantially as described herein with reference to the drawings.

### Brief Description of the Drawings

Figure 1 shows a perspective view of the docking station with accessory devices arranged to engage the compartments of the docking station.
Figure 2 shows a perspective view of the docking station with two compartments occupied by accessory devices.
Figure 3 shows a perspective view of the personal electronic device docking in the first compartment of the docking station.
Figure 4 shows a perspective view of the docking station with all compartments occupied.
Figure 5 displays a plan view of the docking station with a number of different accessories that are interchangeable at the docking station compartments.
Figure 6 (a) (b) and (c) shows a plan view of possible portrait configurations of the docking station.
Figure 7 displays a docking station with three compartments arranged in a landscape configuration with the first compartment occupied by a recorder and the other compartments on either side of the recorder occupied by speaker accessories.
Figure 8 illustrates a perspective view of the docking station, with all its compartments occupied, when in use.
Figure 9 shows a perspective view a docking station arranged in a landscape configuration in which the compartments can pivot.
Figure 10 provides a perspective view of the docking station after the compartments have been pivoted.
Figure 11 provides a side view of the docking station in which the personal electronic device positioned in the first compartment is a camera.

### Detailed Description of the Drawings

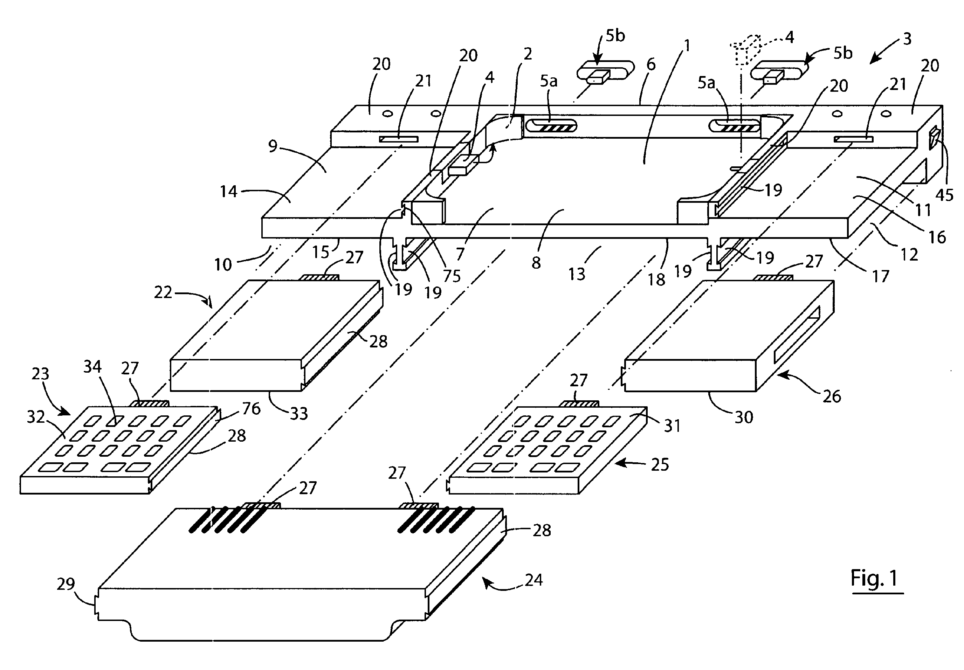

Figure 1 shows a docking station 3 for a personal electronic device such as a mobile phone. The docking station provides a first compartment 1 into which the personal electronic device may be fitted. The first compartment 1 is defined by a docking support in the form of a frame or rim 6 having side walls of suitable material. An open end 7 of the rim 6 allows for easy removal of the docked personal device. The rim 6 may extend about the compartment and be provided with a removable sidewall that can be removed to facilitate the removal of the docked personal device. The first compartment 1 of the docking station 3 shown in Figure 1 has a floor pan or platform 8 that can support the back of the personal device once it has been docked within the first compartment. The first compartment 1 is substantially rectangular and has at each corner thereof rubber grips 2 arranged to secure the docked personal device within the docking station. The rubber grips may further provide a damping means to protect the personal device.

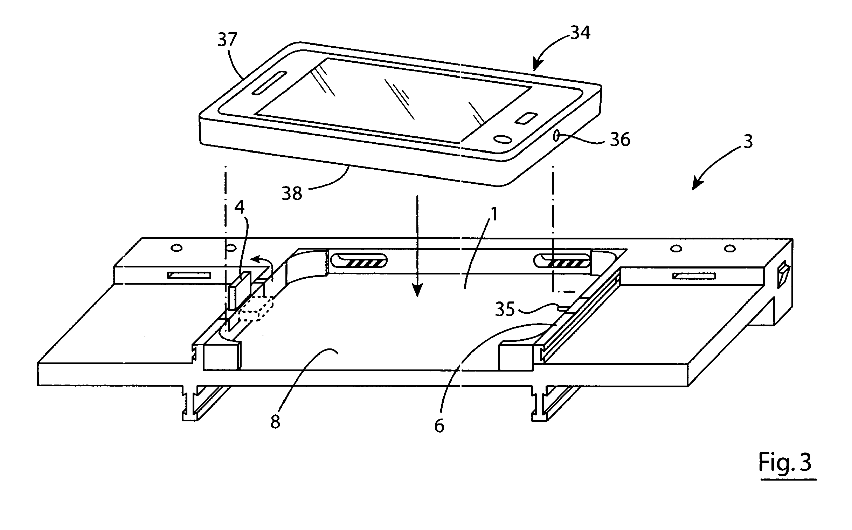

In addition to the rubber grips the first compartment is further provided with an adjustable connector 4 which may be functionally attached for anchoring the personal device within the docking station. The adjustable connector 4 shown in Figure 1 can swivel (see Figure 3) to facilitate engagement with the personal device as the personal device is applied to the docking station. Once the personal device is docked it is retained in place within the first compartment 1 by the connector 4 and the grips 2.

Connective arrangements 5a, 5b are provided along the rim 6 within the first compartment 1. The connective arrangements shown in Figure 1 are apertures 5a with connectors therein which couple to ports 5b. The connectors engage a terminal of the personal device when docked. Each of the connective arrangements 5a,5b are located within the frame 6 so that they are maintained internally within the docking station compartment and are not visible (internally) once the personal device has been docked in the compartment. Connection to the personal electronic device may be achieved from the exterior of the docking station 3. The connective arrangements 5a,5b are not restricted to ports and in further embodiments of the invention the connective arrangements are jacks, terminals, wiring or the likes. The docking station 3 can accommodate any number of interchangeable controls. A release switch 45 is provided that can aid in the removal of connected accessory modules or the removal of the personal electronic device.

Figure 1 shows additional compartments 9,10,11,12 and 13 in which a modular accessory for the personal electronic device is dockable. Each of the compartments are provided with a platform 14,15,16,17 and 18 that supports the modular accessory of the personal electronic device when docked. Side walls 20 defines the edges of each compartment. The dimensions of each of the compartments 9,10,11 and 12 are substantially equal. The embodiment shown in Figure 1 illustrates additional compartments 9 and 11 which are provided on opposing sides of the first compartment 1 for the personal electronic device. Compartments 10 and 12 are on the under surface of the docking station and lie opposite compartments 9 and 11 respectively. Compartment 13 is on the under surface of the docking station and lies opposite the first compartment 1. Compartment 13 is arranged to receive a power source in the form of a battery pack 24 and in this embodiment the dimensions are larger than the compartments 9,10,11 or 12 which are arranged to receive the smaller modular devices. The arrangement of compartments allows for modular devices to be arranged on either side of the personal electronic device.

A connective arrangement 21 is provided in each additional compartment 9,10,11,12 and 13. The connective arrangement shown in Figure 1 is a port for receiving a plug on the modular device, however the connective arrangement may be a terminal, jack or wiring. The connective arrangement may further function as an anchoring means to anchor the modular accessory within the additional compartment. The connective arrangements 21 are located within apertures in the sidewalls 20 so that they are no longer visible within the compartment when the additional compartment is occupied. The modular accessories push fit into the port located at each additional compartment.

Each additional compartment 9,10,11,12 and 13 is provided with a guiding means located on the sidewall 20 of each compartment. The guiding means can be used to guide the modular accessory to the correct position on the docking station 3. In Figure 1 the guiding means is a track 19 which a modular device can engage. The track 19 is provided with an engaging head 75 which allows for engagement with the track. Once the modular device has engaged the track by slotting the rail 28 into the track so as to engage the engaging head 75, the module or device will be retained within the track and can slide along the track. The track 19 will guide the modular device so that the plug on the modular device is in a position to engage the port 21 (the port may be a male or female connective arrangement). In further embodiments the track is located on the platform of each compartment. Additionally engaging means can be provided on opposing sides of the walls.

Figure 1 also shows the arrangement of the modular devices. Each modular device 22,23,24,25 and 26 comprises a male or female (in the embodiment male) connective arrangement 27 for engaging a corresponding female or male connective (in the embodiment female) arrangement 21 at the relevant compartment of the docking station. Each modular device is provided with a rail 28 that is suitable for engaging the track 19 on each compartment of the docking station. The head of the rail 76 can engage the engaging head 75 of the track 19. It is clear from Figure 1 that the additional compartment 13 is provided with two tracks 19 on either side of the compartment, therefore the modular device 24 that is to be docked within additional compartment 13 is provided with two corresponding rails 28 and 29 on either side of the modular device 24, that can engage each of the tracks 19 on either side of the additional compartment 13. The exterior surfaces 30,31,32 and 33 of the respective modules will each have functional features such as speakers, buttons or screens. The exterior surfaces 31 and 32 of devices 25,28 as shown in Figure 1 are key pads provided with individual key buttons 34. The dimensions of each of each of the modular devices are substantially equal to dimensions of their corresponding compartments.

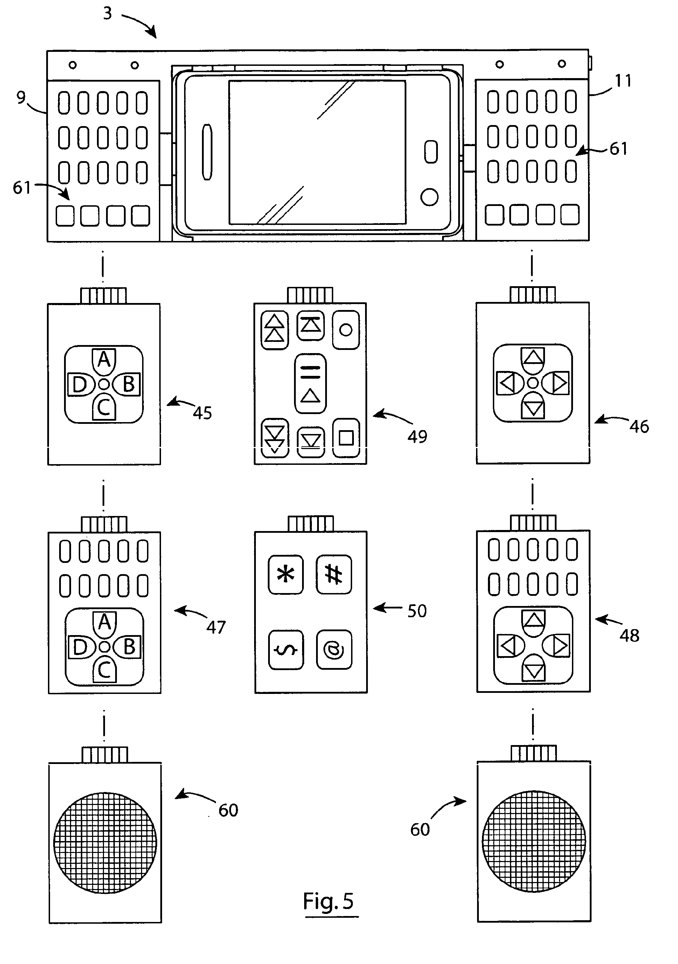

Figure 5 shows the possible modular devices that could be positioned in the compartments 9,10,11 or 12. The modular devices shown in Figure 5 push fit to the docking station 3. A release mechanism may be provided to facilitate removal of the accessory. Figure 5 illustrates that the modular devices are interchangeable and will typically be interchanged for different functionality. It will be appreciated, that when the invention is in use, the modular accessories are operably connected to the personal electronic device. The interchangeable modular accessories will generally be input or output devices. The interchangeable modular accessories can thus be used to output from the personal electronic device or to input to the device. Figure 5 displays some examples of the types of modular devices that can be used, these include opposing hand controls such as gaming control pads 45 and 46 or alternatively gaming control pads with additional text capability 47 and 48. Modular devices in the form of an audio, visual or audiovisual control pad 49 or customised control pads 50 are also possible. Modular devices such as speakers 60 and key pad comprising text buttons 61 are further possibilities.

Some other examples of the types of modular devices which are contemplated for use within the present invention include; controllers including control pads including touch pads, key pads, key boards, roller balls, joysticks, mouse devices, motion sensors, and other controllers such as game controllers and the like; memory devices; processing units including CPU's and hard drives; imaging devices such as a still or video camera; players (including those with recording or "burning" facilities) for audio, visual or audio-visual including CD, DVD, MP3, etc, power units including AC input devices and rechargeable or non-rechargeable batteries; connectors or adapters for facilitating connection of the personal electronic device to other functional or non-functional components;
other peripherals, including wireless enabling devices, readers including card readers, printers, scanners, SIM modules, VOIP modules, GPS (satellite navigation) modules etc. Blanks (non-functional accessories which fill out the compartment space) can also be employed if desired. These could be moulded plastic pieces.

The modular devices provide additional functionality that can be added to the personal electronic device quite easily. The compartments 9,10,11,12 and 13 may comprise any combination of these modular devices. Therefore it is possible that each of the compartments comprise modular device each with a different functionality or alternatively two or more of the additional compartment 9,10,11,12 or 13 may comprise similar or identical modular devices that provide the same function, for example a pair of speakers or a pair of controllers. Figure 5 illustrates the docking station comprising keypads comprising text buttons 61 with similar function located at each compartment 9 and 11. Together these modular units could form a keyboard for example the "Qwerty" type. As illustrated one or all of these keypads 61 could be replaced by any of the other modular devices 45,46,47,48,49,50 or 60. The dimensions and connective arrangements of each of the modular devices are identical to facilitate interchangeability. The dimensions of each modular device is substantially the same as the dimensions of additional compartments 9,10,11 and 12.

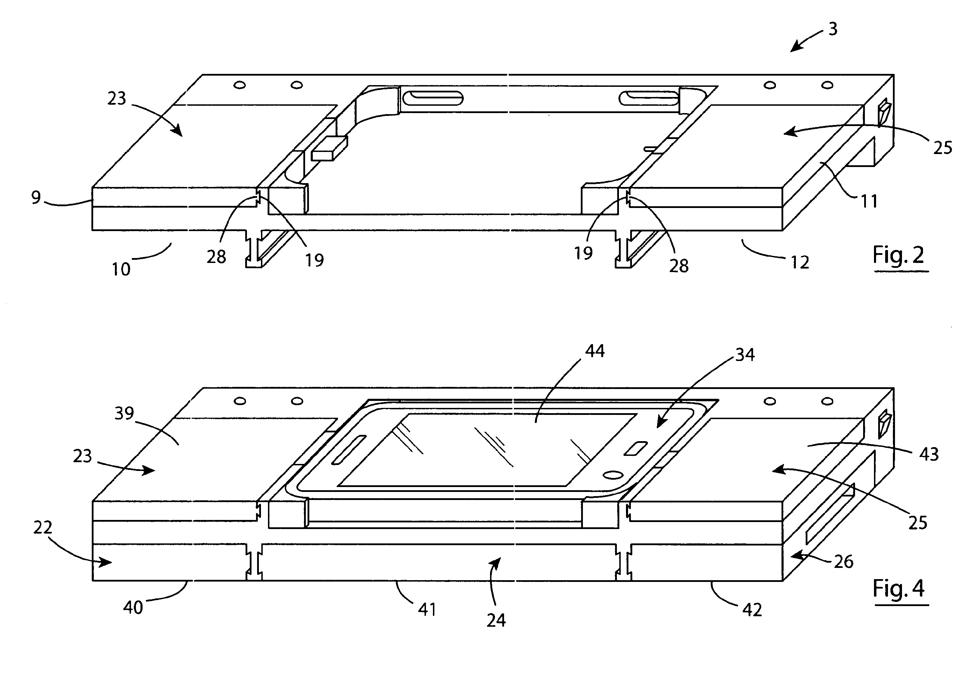

Figure 2 shows the docking station 3 with additional compartments 9 and 11 occupied with modular devices 23 and 25 respectively. Since the dimensions of the modular devices 23 and 25 are substantially the same as the dimensions of their corresponding compartments 9 and 11 a snug fit is provided in which the edges of the modular devices are flush with the edges of the docking station 3. The rail 28 provided on each of the modular devices 23 and 25 has engaged the track 19 in each additional compartment 9 and 10 and guided into a position in which the connective arrangement 27 on the modular device 23, 25 has engaged the port 21 provided at the additional compartments 9 and 10. Once docked the rail 28 remains engaged with the track 19 and provides an anchor that secures the modular device within the compartment. The connecting arrangement 27 also contributes to anchoring the modular device within the compartment.

Generally speaking, it will be desirable that the additional compartment spaces 9,10,11 and 12 are compatible with the same modular devices so that the modular accessories fit in either compartment and operably connect to the personal electronic device. As already outlined in Figure 5 this has many advantages mainly due to the versatile interchangeability. Furthermore, the user may prefer to swap the positions of certain modular accessories based on their preferred hand for operating the accessory such as when using hand controls.

Figure 3 illustrates how to dock the personal electronic device 34 at the first compartment 1 of the docking station 3. The embodiment shown in Figure 3 comprises a connector 4 in addition to a further connector which is an audio jack 35. Both connectors are positioned along the sidewalls 20 of the first compartment 1. The personal electronic device 34 comprises ports 36 and 37 arranged to engage the connectors 4 and 35.

To dock the personal electronic device 34 at the docking station 3 the personal electronic device 34 is orientated at an angle so that the audio jack can be first engaged.

Subsequently the opposite side of the personal electronic device 34 is pushed into position so that the base 38 of device 34 is pushed into position so that the base 38 of the personal electronic device 34 is almost parallel with the platform 8. At this point the adjustable connector 4 can be pivoted to begin to engage the port 37 located on the personal electronic device 34. The personal electronic device 34 is pushed into the compartment until the base of the personal electronic device 34 is on the platform 8. As the personal electronic device 34 approaches a parallel orientation the adjustable connector 4 simultaneously pivots to engage the port 37 more. Once the base 38 of the personal electronic device 34 is completely parallel with the base 8 of the first compartment 1 the adjustable connector 4 has completely engaged the recess to secure the personal electronic device 34 within the first compartment 1. The invention is not limited to one adjustable connector or anchoring means as any number of either type may be used. Furthermore the connector or anchoring means may be located in alternative suitable positions.

Figure 4 shows the docking station 3 with each compartment 1, 9, 10, 11, 12 and 13 occupied. The dimensions of each of the modular devices 22,23,24,25 and 26 and the personal electronic device 34 are such that a snug fit is achieved in which the edges of the modular devices and personal electronic device 34 are flush with the edges of the docking station and are flush with each other. The exposed surfaces 39,40,41,42,43 and 44 are substantially flat so that the overall surface of fully occupied docking station is substantially flat. Each of the components fit into their respective compartments so that no gaps exist between any of the components and the docking station and substantially continuous surface is provided for. Figure 4 illustrates that the docking station will hold the electronic device and any accessories proximate each other in such as way to give an overall impression to the user is that it is an integral piece of equipment.

Figure 4 also displays how any connective arrangements such as ports, jacks, terminals, wiring or the like are accommodated internally in the assembly so that they are hidden from view in the assembly. This is achieved by having any connective arrangements on a sidewall of the compartment. Any connective arrangements on the accessory can also be on a sidewall of the accessory. Accordingly, when each of the accessories or modular devices 22,23,24,25 and 26 is fitted into their compartments, the connective arrangements will be arranged to mate and will be hidden for view. Use of male and female connective arrangements is particularly desirable in this respect as this will help achieve substantially flush mating of the docking support and any accessory. The docking support thus acts as a template to which modular accessories fit.

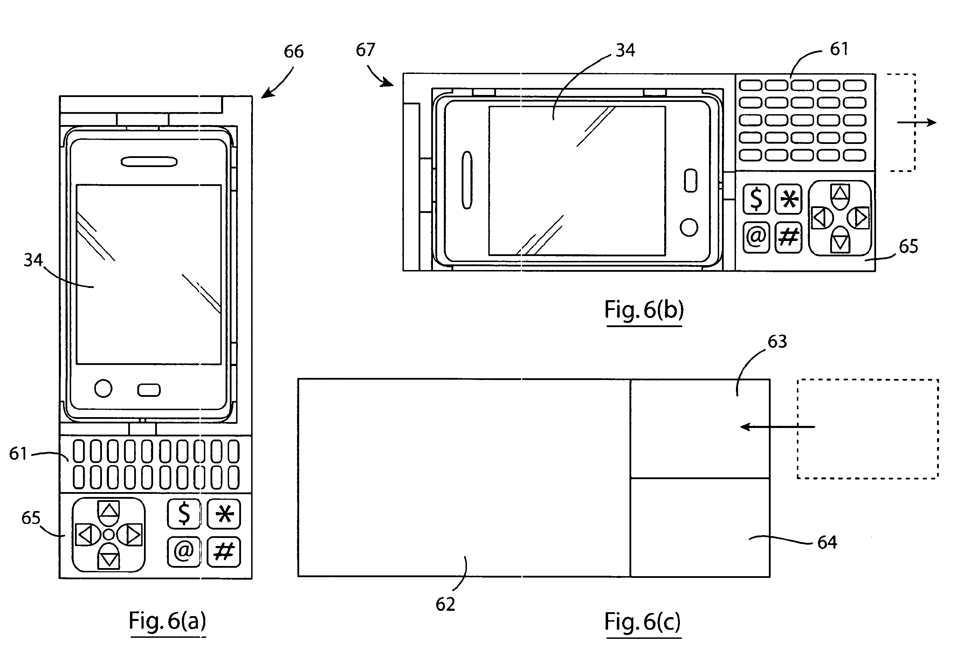

Encompassed within the present invention is an arrangement where two or more compartments for modular accessories are on the same side (for example at one end of the personal electronic device). Examples of such embodiments are illustrated in Figure 6. One general template for such an arrangement is outlined in Figure 6 (c). Figure 6 (c) shows an orientation of the assembly of the present invention where the controls of a module 63,64 are to the right in the correct viewing orientation of the display screen. Such an arrangement will generally result in a landscape type arrangement. While Figure 6(c) illustrates a single compartment 62 suitable for receiving the personal electronic device and two compartments 63,64 suitable for receiving any one of the modular devices, it will be appreciated that any number of compartment spaces can be provided, for example two compartments may be provided, one for the electronic device and the other for receiving a single modular device. Figure 6 (b) shows the functional side of the assembled kit of the invention.

Figure 6(a) illustrates a possible portrait arrangement where the controls are underneath the personal electronic device. Figure 6(a) positions the electronic personal device in the upright position with both modular devices 61 and 65 transversing the width of the docking station 66 below the electronic personal device. In this particular embodiment the docking station 66 is preferably held in an upright position (portrait portion) so that the personal electronic device is always above the modular devices.

Figure 6(b) displays an alternative arrangement in which the personal electronic device and modular devices 61 and 65 are positioned longitudinally. In this orientation the docking station 67 is preferably held in a longitudinal position so that the personal electronic device is on the same longitudinal plane as the modular devices. It will be appreciated that the compartments can be constructed to any desired relative positioning arrangement and there may be one or more compartments. The compartments may be side-by-side, one above another, or any combination thereof.

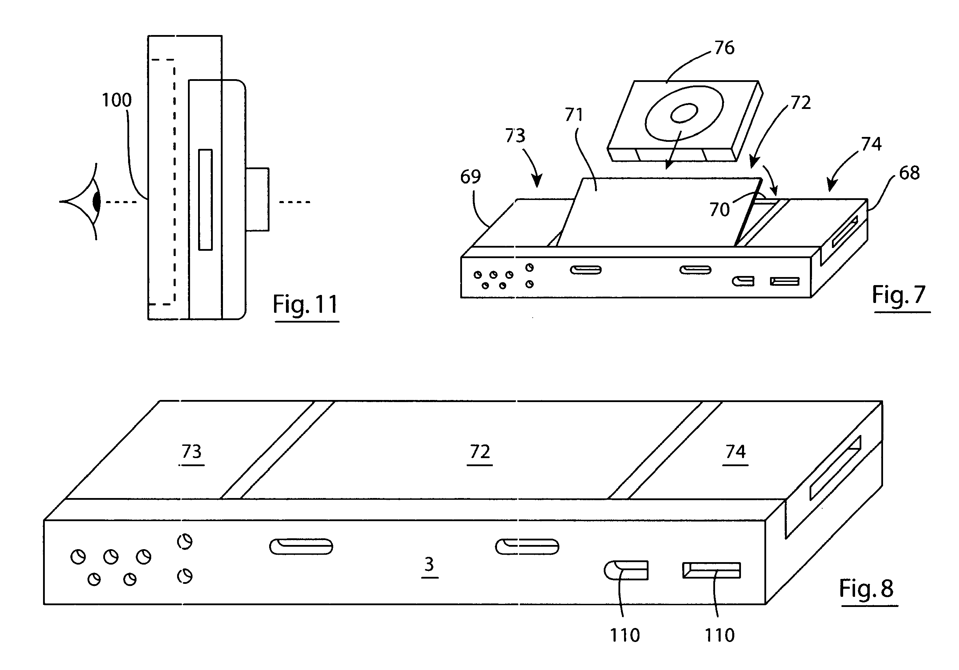

An alternative arrangement such as that shown in Figure 6(a) includes a portrait orientation in which the orientations of the controls of the module are substantially aligned to the correct viewing orientation of the display screen. Generally placing modular units on opposing sides of the personal electronic device will result in the landscape arrangement. It will be appreciated that while it is desirable to have at least two compartments to which the same accessory can be interchangeably fitted, the present invention is not limited to having only one such compartment and one or more compartments or indeed all compartments may be differently sized. The arrangement illustrated in Figure 7 provides an example of a portrait arrangement.

Figure 7 shows a fully occupied docking station comprising 3 compartments. Compartments 68 and 69 are occupied with modular devices 73,74 and the personal electronic device 72 located in the central compartment 70 is a recorder 72 that can receive and play audio, visual or audio visual content such as from disk 76. Compartment 68 and 69 are occupied with sound speaker modular devices 73,74 and the docking station is arranged in a portrait configuration with each of the modular devices flanked on either side of the recorder 72. The deck 71 of the recorder 72 may be opened to allow for loading of disc 76, once the loading is complete the deck may be shut and played. The display may be that of the device 72 itself or as an alternative. The device may be connected to another device (as set out above) which acts at the display.

Figure 8 illustrates the compact arrangement of the fully occupied docking station 3 once the lid of the recorder 72 is shut. It is clear that each modular sound device 73,74 is substantially accommodated within its (respective) compartment. It is also evident that the personal electronic device is substantially accommodated within its compartment. The overall assembly will have substantially flush surfaces at least when all of the compartments are in use. Figure 8 shows that the docking station will hold the electronic device and any accessories proximate each other.

This has the advantage that the overall impression to the user is that it is an integral piece of equipment.

Figure 8 also illustrates how any connective arrangements such as ports, jacks, terminals, wiring or the like are accommodated internally in the assembly so that they are hidden from view in the assembly. This is achieved by having any connective arrangements on a sidewall of the compartment. Any connective arrangements on the accessory can also be on a sidewall of the accessory. Accordingly, when the accessory is fitted into the compartment, the connective arrangements will be arranged to mate and will be hidden for view. Use of male and female connective arrangements is particularly desirable in this respect as this will help achieve substantially flush mating of the docking support and any accessory. External connection ports 110 are provided which allow the docking station to connect to one or more external devices. The external connections may connect to one or more input or output devices that is located outside the device, for example sound speakers. The external connections may also be used to connect to one or more modular devices that are located remotely to the docking station. The external connections can be one of firewire ports, USB ports, speaker ports, battery charger ports and any other types of ports allowing connection any input or output device. It will be appreciated that any of the other embodiments of the invention may also comprise external connection ports 110.

It will be appreciated then that the device is completely modular in construction. Parts can be added and interchanged while the device otherwise functions as an integral unit when assembled. Generally the assembly will be of the type which may be handheld and operated easily by one or more fingers or thumbs in the handheld position.

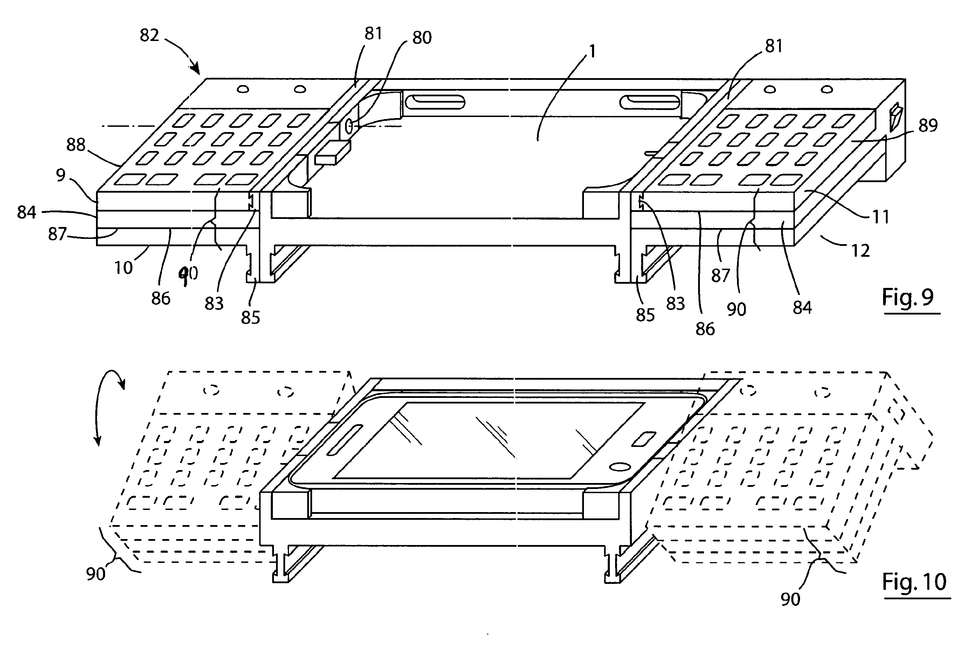

Figure 9 shows a further embodiment of the invention in which compartments 9,10,11 and 12 can pivot about a pivot 80. Figure 9 shows the pivot 80 arranged to connect with the side wall 81 of compartments 9 and 11. In such a configuration the platform 84 of compartments 9,10,11 and 12 is attached to the sidewall 81 along line 83. Lower rims 85 are in turn connected to the undersurface 87 of platform 84 along line 86, so as to form a stacked pivotable arrangement 90 on either side of the first compartment 1. The stacked pivotable arrangement 90 illustrated in Figure 9 comprises modular devices 88,89, sidewalls 81, platforms 84, and lower sidewalls 85. The sidewall 81 forms the only connection of the stacked pivotable arrangement 90 to the docking station 82. The sidewall 81 is connected to the docking station 82 through the pivot 80. The pivot 80 allows the stacked pivotable arrangement 90 to pivot in a clockwise or anticlockwise direction. A locking means may be provided which can be used to lock the stacked pivotable arrangement 90 so that it cannot pivot about pivot 80. In further embodiments the pivot may be positioned to connect with platforms 84 with the remaining elements of the stacked pivotable arrangement 90 attached to the platform 84. It will be appreciated that it is also possible to have the electronic devices pivot also, for example the personal electronic device may flip-up to a desired display angle.

Figure 10 shows the docking station of figure 9 in which the stacked pivotable arrangement 90 has been pivoted about pivot 80 to a desired position. Figure 10 illustrates that the stacked pivotable arrangement 90 can be pivoted in a clockwise or anticlockwise direction.

Figure 11 shows a further embodiment of the invention wherein the personal electronic device is a camera. In such an embodiment the docking station further comprises an opening such as a window 100 to allow images to be recorded without interference. In a further arrangement the camera may be connected to the personal electronic device so that the personal electronic device can display the image being captured and desirably all functionality of the camera.

In alternative embodiments the docking station may incorporate a motion sensor which can be used in gaming wherein control of the game is done through physical motion of the docking station as opposed to through finger controls. Furthermore the docking station may have WIFI capabilities allowing wireless connection to the internet, wireless peer-to-peer connectivity or allowing connection to phone landlines. Another embodiment includes a docking station comprising two SIM cards allowing connection to at least two networks.

The words "comprises/comprising" and the words "having/including" when used herein with reference to the present invention are used to specify the presence of stated features, integers, steps or components but does not preclude the presence or addition of one or more other features, integers, steps, components or groups thereof.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination.

## Claims

1. A docking station kit for a personal electronic device such as a mobile phone, the docking station kit comprising:
a docking support having defined therein:
a first compartment space in which the personal electronic device is dockable;
a second compartment space in which a modular accessory for the personal electronic device is
dockable; and
at least two modular accessories which are interchangeably dockable within the second compartment space.

2. The docking station kit as claimed in claim 1 wherein the docking support comprises three or more compartments.

3. The docking station kit as claimed in claim 1 wherein the modular accessories are input or output devices that can be used to output from the personal electronic device or to input to the personal electronic device.

4. The docking station kit as claimed in any one of the previous claims wherein at least one of the at least two modular accessories is one of speakers; controllers; memory devices; processing units; imaging devices; players; power units; connectors or adapters; printer devices; TV reception devices; radio reception devices; TV and radio reception devices; other peripherals; or blanks.

5. The docking station kit as claimed in claim 4 wherein the blanks are moulded plastic pieces.

6. The docking station kit as claimed in any one of the previous claims wherein the docking support further comprises a third compartment in which a modular accessory for the personal electronic device is dockable.

7. The docking station kit as claimed in claim 6 wherein the second and third compartments are on opposing sides of the first compartment space for the personal electronic device.

8. The docking station kit as claimed in claim 6 wherein the second and third compartments are on the same side of the first compartment space for the personal electronic device.

9. The docking station kit as claimed in any one of claims 6 to 8 wherein the dimensions of the second and third compartments are substantially the same.

10. The docking station kit as claimed in any one of claims 6 to 9 wherein the second and third compartments are compatible with the same modular devices.

11. The docking station kit as claimed in any one of the previous claims wherein any accessory is substantially accommodated within its compartment so that the overall assembly will have substantially flush surfaces when all the compartments are in use.

12. The docking station kit as claimed in any one of the previous claims wherein when an accessory connects to the docking support the outer surfaces of the accessory form a substantially continuous surface with the docking support or personal electronic device.

13. The docking station kit as claimed in any one of the previous claims wherein any connective arrangements are accommodated internally in the assembly so that they are hidden from view when the modular accessories are assembled with the docking station.

14. The docking station kit as claimed in any one of the previous claims wherein the docking station provides a physical barrier which protects the functional connection to the accessory.

15. The docking station kit as claimed in any one of the previous claims wherein the docking support provides physical support at the functional connection and for that part of the device that extends away from the functional support.

16. The docking station kit as claimed in any one of the previous claims wherein the accessories push-fit to the docking station.

17. The docking station kit as claimed in claim 16 wherein the push-fit is at least one of click-fit, or snap-fit.

18. The docking station kit as claimed in any one of claims wherein each compartment and accessory comprises a track or rail for guiding the accessory towards the correct position within the compartment.

19. The docking station kit as claimed in any one of the previous claims further comprising a pivot arrangement for allowing mating of the personal electronic device or accessory with the docking support.

20. The docking station kit as claimed in any one of the previous claims further comprising a pivotable arrangement for one or more of the personal electronic device and the accessories while functionally connected to the docking support.

21. The docking station kit as claimed in any one of the previous claims wherein the docking support for the personal electronic device includes one or more grips for assisting in the retention of the device within the docking support.

22. The docking station kit as claimed in any one of the previous claims wherein the docking support comprises a substantially planar longitudinal member upon which compartments are defined by one or more upstanding walls.

23. The docking station kit as claimed in claim 23 wherein each compartment further comprises a base that physically supports the personal electronic device or accessory.

24. A docking support having defined therein:
a first compartment space in which a personal electronic device is dockable;
a second compartment space in which a modular accessory for the personal electronic device is dockable.

25. A modular accessory adapted to mate to a docking support according to claim 27.
